(19) Europäisches Patentamt
European Patent Office
Office européen des brevets

(11) **EP 3 049 260 B1**

(12) **FASCICULE DE BREVET EUROPEEN**

(45) Date de publication et mention
de la délivrance du brevet:
**08.11.2017 Bulletin 2017/45**

(51) Int Cl.:
***B60C 23/04*** *(2006.01)* ***B60C 23/20*** *(2006.01)*

(21) Numéro de dépôt: **14784286.8**

(86) Numéro de dépôt international:
**PCT/FR2014/052270**

(22) Date de dépôt: **12.09.2014**

(87) Numéro de publication internationale:
**WO 2015/044553 (02.04.2015 Gazette 2015/13)**

(54) **PROCEDE ET SYSTEME DE SURVEILLANCE D'UN PNEUMATIQUE**

VERFAHREN UND DESSEN SYSTEM ZUR REIFENÜBERWACHUNG

METHOD AND SYSTEM FOR MONITORING A TIRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.09.2013 FR 1359353**

(43) Date de publication de la demande:
**03.08.2016 Bulletin 2016/31**

(73) Titulaire: **Renault S.A.S.**
**92100 Boulogne-Billancourt (FR)**

(72) Inventeurs:
• **SAINT-LOUP, Philippe**
**F-78760 Jouards-Pontchartrain (FR)**
• **MONTI, Alessandro**
**F-92250 La Garenne-Colombes (FR)**
• **GUILLEREY, Bernard**
**F-78180 Montigny Le Bretonneux (FR)**

(56) Documents cités:
**DE-A1-102011 122 825 US-A- 4 695 823**

**Description**

La présente invention se rapporte de manière générale au domaine de l'automobile, et plus précisément à un procédé de surveillance d'un pneumatique de véhicule.

En effet, la réglementation européenne imposera bientôt aux constructeurs automobiles de doter leurs véhicules de moyens de surveillance de la pression des roues de ces véhicules.

Actuellement certains véhicules sont équipés de capteurs permettant de mesurer la pression des pneumatiques de ces véhicules. Un tel capteur est situé généralement dans la valve d'un pneumatique et envoie périodiquement par une liaison sans fil à un calculateur du véhicule correspondant diverses informations. Ces informations comportent notamment :

- la pression du pneumatique,
- la température du pneumatique,
- un identifiant de capteur,
- une information de niveau de charge d'une batterie alimentant le capteur,
- une information de mouvement de la roue comportant le pneumatique,
- un sens de rotation de cette roue,
- et une information permettant de déceler une défaillance du capteur.

Ces informations sont traitées par un calculateur du véhicule, qui en déduit l'état sous-gonflé ou non des pneumatiques du véhicule. Cette information de sous-gonflage résulte d'une estimation reposant sur un modèle utilisant la température, la pression du pneumatique, et parfois d'autres informations disponibles au niveau du calculateur du véhicule.

Ainsi le document WO2007012771 décrit un système d'estimation de la pression de gonflage des pneumatiques d'un véhicule, recoupant les informations de pression émises par ces pneumatiques, et les valeurs d'accélérations verticales des roues du véhicule.

La demande de brevet FR2998514 décrit un système de surveillance de pression des pneumatiques d'un véhicule automobile utilisant un capteur de pression situé dans chaque pneumatique du véhicule, dans lequel on détermine pour chaque pneumatique, un état normal ou un état crevé, ou un état sous-gonflé ou encore un état de pressurisation inadaptée aux hautes vitesses, en fonction de la comparaison de la pression de chaque pneumatique avec des seuils de pression relatifs à chacun de ces états.

Le document US4695823, en accord avec les préambules respectifs des revendications 1 et 6, décrit un système de surveillance de pneumatiques dans lequel des capteurs de pression et de température localisés dans chaque pneu permettent de remonter une information de pression et de température à un récepteur distant connecté à un moyen d'alerte.

Cependant, ces méthodes existantes, utilisant des mesures de pression et de température remontées périodiquement par des capteurs situés dans ces pneumatiques, sont lentes à déterminer si un de ces pneumatiques est sous-gonflé ou non. Notamment du fait des bruits de mesure, qui sont parfois liés à des erreurs de transmission des informations reçues par le calculateur du véhicule, la confirmation qu'un pneumatique est réellement sous-gonflé nécessite parfois un filtrage numérique, et/ou le franchissement par un compteur d'un seuil haut d'un nombre d'estimations de basse pression.

Ces méthodes ne sont donc pas efficaces dans la détection rapide d'une crevaison notamment.

Un des buts de l'invention est de remédier à au moins une partie des inconvénients de la technique antérieure en fournissant un procédé de surveillance d'un pneumatique d'un véhicule automobile et un système de surveillance d'un pneumatique d'un véhicule automobile, qui permettent de remonter rapidement à un calculateur du véhicule un problème de fuite rapide, ou de crevaison.

A cette fin, l'invention propose un procédé de surveillance d'un pneumatique d'un véhicule automobile, mis en oeuvre dans la roue comportant ledit pneumatique, ledit procédé comportant :

- une étape de mesures d'une température dans ledit pneumatique,
- une étape de mesures d'une pression dans ledit pneumatique, caractérisé en ce qu'il comprend en outre:
- une étape de calcul d'une variation en valeur absolue du rapport entre ladite pression mesurée et ladite température mesurée, sur une période de temps inférieure à une durée prédéterminée,
- une étape de comparaison de ladite variation calculée à un seuil prédéterminé,
- et une étape d'envoi d'un message d'alerte à un calculateur dudit véhicule si ladite variation calculée est supérieure audit seuil prédéterminé sur ladite période de temps.

Grâce à l'invention, le calculateur du véhicule dispose rapidement d'une information sur la variation de masse d'air dans le pneumatique du véhicule, le rapport entre la pression et la température du pneumatique étant significatif de la masse d'air contenue dans le pneumatique. Cette information directement fournie par le système selon l'invention, contenu dans la roue, permet de s'affranchir des variations climatiques de pression non facilement filtrables dans les méthodes existantes de surveillance des pneumatiques, par exemple lorsque le véhicule s'arrête après une période de roulage ayant augmenté fortement la température de ses pneumatiques. L'invention permet donc d'éviter les alertes injustifiées tout en fournissant rapidement une alerte de type crevaison ou fuite rapide d'un pneumatique, de façon robuste aux erreurs dues à la transmission des messages envoyés par le système selon l'invention.

Il est à noter que contrairement aux méthodes existantes dans lesquelles un capteur envoie périodiquement des mesures au calculateur du véhicule, par exemple toutes les secondes, l'invention permet d'avertir beaucoup plus rapidement le calculateur d'un problème, par exemple en quelques dizaines de millisecondes, en s'affranchissant de cette périodicité.

De plus, l'invention permet d'économiser la batterie alimentant le capteur lorsqu'elle est utilisée à la place de cet envoi périodique de mesures au calculateur, bien qu'elle soit également utilisable en plus des méthodes existantes.

Selon une caractéristique avantageuse de l'invention, ledit message d'alerte comporte le signe de ladite variation calculée. Ainsi l'invention permet de distinguer une fuite de pression d'un regonflage du pneumatique.

Selon une autre caractéristique avantageuse de l'invention, ledit message d'alerte comporte la valeur absolue de ladite variation calculée, ainsi que la valeur de ladite période de temps.

Ces informations supplémentaires permettent au calculateur du véhicule de distinguer une crevaison lente d'une fuite rapide de pression du pneumatique.

Selon une autre caractéristique avantageuse de l'invention, ledit message d'alerte comporte des valeurs de mesure de ladite pression mesurée et de ladite température mesurée sur ladite période de temps.

Ces informations supplémentaires permettent au calculateur de vérifier la cohérence des données fournies par le système selon l'invention et d'en déduire sa défaillance éventuelle.

Selon une autre caractéristique avantageuse de l'invention, ledit message d'alerte est crypté. Cette caractéristique additionnelle permet encore d'améliorer la robustesse de l'alerte fournie par le système selon l'invention, par rapport aux erreurs de transmission. Le cryptage du message comporte par exemple une simple redondance cyclique afin de ne pas augmenter son temps d'acquisition par le calculateur du véhicule.

L'invention concerne aussi un système de surveillance d'un pneumatique d'un véhicule automobile, ledit système étant situé dans ledit pneumatique, et comportant un moyen de mesure d'une température dudit pneumatique, ainsi qu'un moyen de mesure de la pression dudit pneumatique, ledit système comportant en outre un émetteur sans fil, ledit système étant caractérisé en ce qu'il comporte :

-    des moyens de calcul aptes à calculer une variation en valeur absolue du rapport entre une pression mesurée par ledit moyen de mesure de pression, et une température mesurée par ledit moyen de mesure de température, sur une période de temps inférieure à une durée prédéterminée,
-    des moyens de comparaison de ladite variation à un seuil prédéterminé,
-    et des moyens d'envoi d'un message d'alerte à un calculateur dudit véhicule si ladite variation est supérieure à un seuil prédéterminé sur ladite période de temps.

Selon une caractéristique avantageuse du système de surveillance d'un pneumatique d'un véhicule automobile selon l'invention, ledit message d'alerte comporte au moins une information choisie parmi :

-    le signe de ladite variation dudit rapport entre ladite pression mesurée et ladite température mesurée,
-    la valeur absolue de ladite variation dudit rapport entre ladite pression mesurée et ladite température mesurée,
-    la valeur de ladite période de temps,
-    et des valeurs de mesure de ladite pression mesurée et de ladite température mesurée sur ladite période de temps.

Selon une autre caractéristique avantageuse du système de surveillance d'un pneumatique d'un véhicule automobile selon l'invention, lesdits moyens d'envoi comportent des moyens de cryptage dudit message d'alerte.

Le système de surveillance d'un pneumatique selon l'invention présente des avantages analogues à ceux du procédé de surveillance d'un pneumatique selon l'invention.

D'autres caractéristiques et avantages apparaîtront à la lecture d'un mode de réalisation préféré décrit en référence aux figures dans lesquelles :

-    la figure 1 représente un véhicule muni de systèmes de surveillance selon l'invention,
-    la figure 2 représente un système de surveillance selon l'invention, dans ce mode de réalisation préféré,
-    et la figure 3 représente des étapes d'un procédé de surveillance selon l'invention, dans ce mode de réalisation préféré.

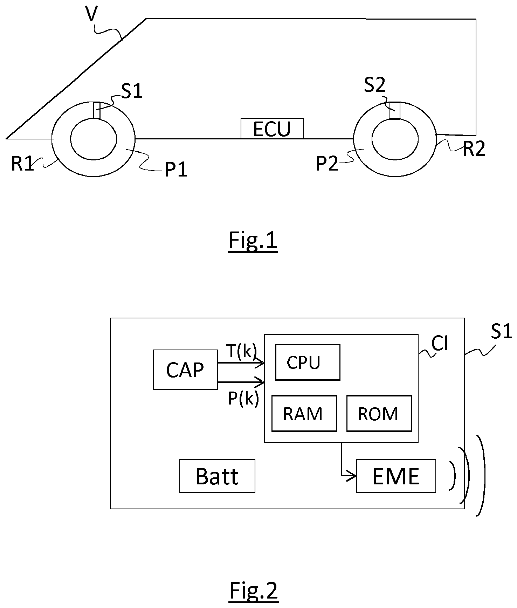

Selon un mode préféré de réalisation de l'invention représenté à la **figure 1,** on équipe un véhicule V d'un système de surveillance selon l'invention sur chaque roue du véhicule V. Ainsi la roue R1 comporte un pneumatique P1 comportant dans sa valve un système S1 de surveillance selon l'invention, et la roue R2 comporte un pneumatique P2 comportant dans sa valve un autre système S2 de surveillance selon l'invention.

Ces systèmes de surveillance S1 et S2 sont assimilables à des capteurs améliorés, aptes à communiquer sans fil, par exemple en utilisant la technologie Wi-Fi définie par la norme IEEE 802.11, ou la norme Bluetooth, avec un calculateur ECU du véhicule V. Le calculateur ECU du véhicule est apte à afficher sur une interface Homme-Machine des informations d'alerte à un utilisateur du véhicule.

En référence à la **figure 2,** le système de surveillance S1 est maintenant décrit. Il comporte un capteur CAP, comportant lui-même un moyen de mesure de la pression dans le pneumatique P1, et un moyen de mesure de la température dans le pneumatique P1. En variante le système S1 comporte deux capteurs, chacun de ces capteurs étant spécifique à la mesure d'une pression ou d'une température.

Le capteur CAP mesure une température T(k) pour chaque pas de mesure k, et une mesure de pression P(k) pour chaque pas de mesure k. Ces pas de mesure sont espacés de 1s (seconde) par exemple. Les mesures de pression P(k) et de température T(k) sont envoyées à chaque nouveau pas de mesure, à une carte informatique CI. Cette carte informatique CI comporte un calculateur CPU, une mémoire vive RAM et une mémoire morte ROM.

Le calculateur CPU est apte à calculer une variation de masse d'air du pneumatique est à comparer cette variation en valeur absolue à un seuil prédéterminé seuil_P. Lorsque ce seuil est franchi, la carte informatique CI compose un message d'alerte qui est transmis à un émetteur sans fil EME, qui envoie lui-même ce message d'alerte par Wi-Fi ou Bluetooth au calculateur du véhicule V.

La carte informatique CI, l'émetteur EME et le capteur CAP sont alimentés par une batterie Batt.

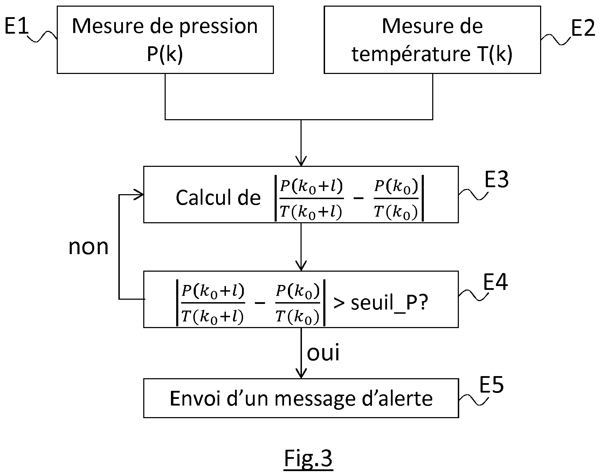

En référence à la **figure 3**, un procédé de surveillance selon l'invention est représenté sous la forme d'un algorithme comportant des étapes E1 à E5.

Le procédé est mis en oeuvre dans le système S1 de surveillance selon l'invention. Il est également mis en oeuvre de manière identique dans les trois autres roues du véhicule V.

L'étape E1 est la mesure de la pression du pneumatique P1. Cette mesure est une pression relative à la pression atmosphérique de référence, et est effectuée continuellement à chaque pas de mesure k.

L'étape E2 est la mesure de la température du pneumatique P1. Cette mesure est également effectuée continuellement à chaque pas de mesure k, en parallèle à l'étape E1, et est représentative de la température dans la valve du pneumatique P1.

L'étape E3 est le calcul de la valeur :

$$\left| \frac{P(k_0 + l)}{T(k_0 + l)} - \frac{P(k_0)}{T(k_0)} \right|$$

où :

P($k_0$+l) est la pression mesurée dans le pneumatique au pas de mesure $k_0$+l, l étant une variable entière,

T($k_0$+l) est la pression mesurée dans le pneumatique au pas de mesure $k_0$+l, P(ko) est la pression mesurée au pas de mesure $k_0$,

T($k_0$) est la température mesurée au pas de mesure

$k_0$.

Ainsi à partir d'un pas de mesure ko de départ, le calculateur CPU mesure, à chaque nouveau pas de mesure, la variation de la valeur absolue du rapport entre la pression mesurée et la température mesurée sur une période temps prédéterminée l. l est une variable initialisée à 1 et s'incrémentant de 1 à chaque nouveau pas de mesure jusqu'à une valeur entière inférieure ou égale à une durée prédéterminée. Cette durée prédéterminée est fixée à dix pas de mesure par exemple si l'invention est utilisée avec une autre mode de surveillance des pneumatiques, au à trente pas de mesure si l'invention est utilisée comme seul mode de surveillance des pneumatiques du véhicule V. Au-delà de cette durée prédéterminée, le calculateur CPU recommence à calculer la variation de la valeur absolue du rapport entre la pression mesurée et la température mesurée à partir d'un nouveau pas ko de mesure de départ.

En variante le calculateur CPU mesure la variation de la valeur absolue du rapport entre la pression mesurée et la température mesurée, avec l'étant fixe, le calculateur prenant alors un nouveau pas de mesure de départ ko tous les l pas de mesure. Dans cette variante l'est par exemple égal à 10.

L'étape E4 est la comparaison de la variation calculée en valeur absolue à l'étape E3, avec un seuil prédéterminé seuil_P, égal à 0.3 bars par exemple. Cette étape E4 a lieu pour chaque nouveau calcul effectué à l'étape E3, donc de manière continue. Si dans cette étape E4 le calculateur CPU détermine que la variation calculée à l'étape E3 est inférieure au seuil seuil_P, alors l'étape suivante est une nouvelle étape E3, sinon l'étape suivante est l'étape E5.

L'étape E5 est l'envoi d'un message d'alerte au calculateur ECU du véhicule, par l'émetteur EME. Ce message est préférentiellement crypté, par exemple en utilisant un code cyclique redondant. Ce message d'alerte comporte une indication de dépassement du seuil seuil_P, représentatif d'une perte de masse d'air dans le véhicule. Ce message d'alerte comporte préférentiellement d'autres informations, qui sont notamment :

- la variation signée du rapport entre la pression mesurée et ladite température mesurée, calculée à l'étape E3 précédente. Cette donnée permet de distinguer un dégonflage d'un regonflage.
- la valeur du nombre entier l utilisée à l'étape E3 et correspondant à la période de temps utilisée pour calculer la variation du rapport entre la pression mesurée et la température mesurée à l'étape E3. Cette valeur permet de distinguer une fuite rapide d'une crevaison lente.
- et des valeurs de mesure de la pression mesurée et de la température mesurée pendant cette période de temps. Ces valeurs permettent de vérifier la cohérence des informations remontées par le système selon l'invention.

A l'issue de l'étape E5, la valeur de la variable l'est mise à jour à 1 et on retourne à l'étape E3, le calculateur prenant le pas de mesure courant k comme nouveau pas de mesure de départ ko. En variante cette mise à jour de la variable I et la reprise de l'étape E3 est effectuée uniquement sur requête du calculateur ECU du véhicule V, afin d'éviter au calculateur du véhicule V de recevoir continuellement des messages d'alerte en cas de fuite rapide du pneumatique P1.

## Revendications

1. Procédé de surveillance d'un pneumatique (P1) d'un véhicule (V) automobile, mis en oeuvre dans la roue comportant ledit pneumatique (P1), ledit procédé comportant :

- une étape (E1) de mesures (T(k)) d'une température dans ledit pneumatique (P1),
- une étape (E2) de mesures (P(k)) d'une pression dans ledit pneumatique (P1),

ledit procédé étant **caractérisé en ce qu'**il comprend en outre:

- une étape (E3) de calcul d'une variation en valeur absolue du rapport entre ladite pression mesurée et ladite température mesurée, sur une période de temps (I) inférieure à une durée prédéterminée,
- une étape (E4) de comparaison de ladite variation calculée à un seuil prédéterminé (seuil_P),
- et une étape (E5) d'envoi d'un message d'alerte à un calculateur (ECU) dudit véhicule si ladite variation calculée est supérieure audit seuil prédéterminé (seuil_P) sur ladite période de temps I).

2. Procédé de surveillance selon la revendication 1, **caractérisé en ce que** ledit message d'alerte comporte le signe de ladite variation calculée.

3. Procédé de surveillance selon la revendication 1 ou 2, **caractérisé en ce que** ledit message d'alerte comporte la valeur absolue de ladite variation calculée, ainsi que la valeur de ladite période de temps (I).

4. Procédé de surveillance selon l'une quelconque des revendications 1 à 3, **caractérisé en ce que** ledit message d'alerte comporte des valeurs de mesure de ladite pression mesurée et de ladite température mesurée sur ladite période de temps (I).

5. Procédé de surveillance selon l'une quelconque des revendications 1 à 4, **caractérisé en ce que** ledit message d'alerte est crypté.

6. Système (S1) de surveillance d'un pneumatique (P1) d'un véhicule (V) automobile, ledit système étant situé dans ledit pneumatique (P1), et comportant un moyen de mesure (CAP) d'une température dudit pneumatique, ainsi qu'un moyen de mesure (CAP) de la pression dudit pneumatique (P1), ledit système (S1) comportant en outre un émetteur sans fil (EME), ledit système (S1) étant **caractérisé en ce qu'**il comporte :

- des moyens de calcul (CPU) aptes à calculer une variation en valeur absolue du rapport entre une pression mesurée par ledit moyen de mesure de pression (CAP), et une température mesurée par ledit moyen de mesure de température (CAP), sur une période de temps (I) inférieure à une durée prédéterminée,
- des moyens de comparaison de ladite variation à un seuil prédéterminé (seuil_P),
- et des moyens d'envoi (EME) d'un message d'alerte à un calculateur (ECU) dudit véhicule (V) si ladite variation est supérieure à un seuil prédéterminé (seuil_P) sur ladite période de temps (I).

7. Système (S1) de surveillance d'un pneumatique (P1) d'un véhicule (V) automobile selon la revendication 6, **caractérisé en ce que** ledit message d'alerte comporte au moins une information choisie parmi :

- le signe de ladite variation dudit rapport entre ladite pression mesurée et ladite température mesurée,
- la valeur absolue de ladite variation dudit rapport entre ladite pression mesurée et ladite température mesurée,
- la valeur de ladite période de temps (I),
- et des valeurs de mesure de ladite pression mesurée et de ladite température mesurée sur ladite période de temps (I).

8. Système (S1) de surveillance d'un pneumatique (P1) d'un véhicule (V) automobile selon la revendication 6 ou 7, **caractérisé en ce que** lesdits moyens d'envoi (EME) comportent des moyens de cryptage dudit message d'alerte.

## Patentansprüche

1. Verfahren zur Überwachung eines Reifens (P1) eines Kraftfahrzeugs (V), das in dem Rad, das den Reifen (P1) umfasst, umgesetzt ist, das Verfahren umfassend:

- einen Schritt (E1) von Messungen (T(k)) einer Temperatur in dem Reifen (P1),

- einen Schritt (E2) von Messungen (P(k)) eines Drucks in dem Reifen (P1),

wobei das Verfahren **dadurch gekennzeichnet ist, dass** es ferner Folgendes umfasst:

- einen Schritt (E3) des Berechnens einer Abweichung des absoluten Werts des Verhältnisses zwischen dem gemessenen Druck und der gemessenen Temperatur für einen Zeitraum (I), der geringer ist als eine vorbestimmte Dauer,
- einen Schritt (E4) des Vergleichens der berechneten Abweichung mit einem vorbestimmten Schwellenwert (Schwelle P),
- und einen Schritt (E5) des Sendens einer Warnmeldung an einen Rechner (ECU) des Fahrzeugs, wenn die berechnete Abweichung für den Zeitraum (I) größer als der vorbestimmte Schwellenwert (Schwelle_P) ist.

2. Überwachungsverfahren nach Anspruch 1, **dadurch gekennzeichnet, dass** die Warnmeldung das Zeichen der berechneten Abweichung umfasst.

3. Überwachungsverfahren nach Anspruch 1 oder 2, **dadurch gekennzeichnet, dass** die Warnmeldung den absoluten Wert der berechneten Abweichung sowie den Wert des Zeitraums (I) umfasst.

4. Überwachungsverfahren nach einem der Ansprüche 1 bis 3, **dadurch gekennzeichnet, dass** die Warnmeldung Messwerte des gemessenen Drucks und der gemessenen Temperatur für den Zeitraum (I) umfasst.

5. Überwachungsverfahren nach einem der Ansprüche 1 bis 4, **dadurch gekennzeichnet, dass** die Warnmeldung verschlüsselt ist.

6. System (S1) zur Überwachung eines Reifens (P1) eines Kraftfahrzeugs (V), wobei sich das System in dem Reifen (P1) befindet und ein Mittel zum Messen (CAP) einer Temperatur des Reifens sowie ein Mittel zum Messen (CAP) des Drucks des Reifens (P1) umfasst, das System (S1) ferner umfassend einen drahtlosen Sender (EME), wobei das System (S1) **dadurch gekennzeichnet ist, dass** es Folgendes umfasst:

- Rechenmittel (CPU), die in der Lage sind, eine Abweichung des absoluten Werts des Verhältnisses zwischen einem Druck, der von dem Druckmessmittel (CAP) gemessen wird, und einer Temperatur, die von dem Temperaturmessmittel (CAP) gemessen wird, für einen Zeitraum (I), der geringer als eine vorbestimmte Dauer ist, zu berechnen,
- Mittel zum Vergleichen der Abweichung mit einem vorbestimmten Schwellenwert (Schwelle_P),
- und Mittel zum Senden (EME) einer Warnmeldung an einen Rechner (ECU) des Fahrzeugs (V), wenn die Abweichung für den Zeitraum (I) größer als ein vorbestimmter Schwellenwert (Schwelle_P) ist.

7. System (S1) zur Überwachung eines Reifens (P1) eines Kraftfahrzeugs (V) nach Anspruch 6, **dadurch gekennzeichnet, dass** die Warnmeldung mindestens eine Information umfasst, die aus Folgendem ausgewählt wird:

- dem Zeichen der Abweichung des Verhältnisses zwischen dem gemessenen Druck und der gemessenen Temperatur,
- dem absoluten Wert der Abweichung des Verhältnisses zwischen dem gemessenen Druck und der gemessenen Temperatur,
- dem Wert des Zeitraums (I),
- und Messwerten des gemessenen Drucks und der gemessenen Temperatur für den Zeitraum (I).

8. System (S1) zur Überwachung eines Reifens (P1) eines Kraftfahrzeugs (V) nach Anspruch 6 oder 7, **dadurch gekennzeichnet, dass** die Mittel zum Senden (EME) Mittel zum Verschlüsseln der Warnmeldung umfassen.

**Claims**

1. Method for monitoring a tire (P1) of a motor vehicle (V), implemented in the wheel comprising said tire (P1), said method comprising:

- a step (E1) of measuring (T(k)) a temperature in said tire (P1),
- a step (E2) of measuring (P(k)) a pressure in said tire (P1),

said method being **characterized in that** it further comprises:

- a step (E3) of calculating a variation, as an absolute value, of the ratio between said measured pressure and said measured temperature, over a period of time (1) less than a predetermined duration,
- a step (E4) of comparing said calculated variation to a predetermined threshold (seuil_P),
- and a step (E5) of sending an alert message to a computer (ECU) of said vehicle if said calculated variation is above said predetermined threshold (seuil_P) over said time period (1).

**2.** Monitoring method according to Claim 1, **characterized in that** said alert message comprises the sign of said calculated variation.

**3.** Monitoring method according to Claim 1 or 2, **characterized in that** said alert message comprises the absolute value of said calculated variation, as well as the value of said time period (1).

**4.** Monitoring method according to any one of Claims 1 to 3, **characterized in that** said alert message comprises measurement values of said measured pressure and of said measured temperature over said time period (1).

**5.** Monitoring method according to any one of Claims 1 to 4, **characterized in that** said alert message is encrypted.

**6.** System (S1) for monitoring a tire (P1) of a motor vehicle (V), said system being situated in said tire (P1), and comprising a means (CAP) for measuring a temperature of said tire, and a means (CAP) for measuring the pressure of said tire (P1), said system (S1) further comprising a wireless emitter (EME), said system (S1) being **characterized in that** it comprises:

- calculation means (CPU) suitable for calculating a variation, as an absolute value, of the ratio between a pressure measured by said pressure measurement means (CAP), and a temperature measured by said temperature measurement means (CAP), over a time period (1) less than a predetermined duration,
- means for comparing said variation to a predetermined threshold (seuil_P),
- and means (EME) for sending an alert message to a computer (ECU) of said vehicle (V) if said variation is above a predetermined threshold (seuil_P) over said time period (1).

**7.** System (S1) for monitoring a tire (P1) of a motor vehicle (V) according to Claim 6, **characterized in that** said alert message comprises at least one information item chosen from:

- the sign of said variation of said ratio between said measured pressure and said measured temperature,
- the absolute value of said variation of said ratio between said measured pressure and said measured temperature,
- the value of said time period (1),
- and measurement values of said measured pressure and of said measured temperature over said time period (1).

**8.** System (S1) for monitoring a tire (P1) of a motor vehicle (V) according to Claim 6 or 7, **characterized in that** said sending means (EME) comprise means for encrypting said alert message.

Fig.1

Fig.2

E1 — Mesure de pression P(k)

E2 — Mesure de température T(k)

E3 — Calcul de $\left|\dfrac{P(k_0+l)}{T(k_0+l)} - \dfrac{P(k_0)}{T(k_0)}\right|$

non

E4 — $\left|\dfrac{P(k_0+l)}{T(k_0+l)} - \dfrac{P(k_0)}{T(k_0)}\right| > $ seuil_P?

oui

E5 — Envoi d'un message d'alerte

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007012771 A
- FR 2998514

- US 4695823 A